# EUROPÄISCHE PATENTSCHRIFT

(11) **EP 3 831 202 B1**
(45) Veröffentlichungstag und Bekanntmachung des Hinweises auf die Patenterteilung: **19.08.2026**
(21) Anmeldenummer: 20401060.7
(22) Anmeldetag: 30.11.2020
(51) Int. Cl.: A01M 7/00

(54) **LANDWIRTSCHAFTLICHES SPRITZGERÄT**
AGRICULTURAL SPRAYER
PULVÉRISATEUR AGRICOLE

(30) Priorität: 02.12.2019 DE 102019132659
(43) Veröffentlichungstag der Anmeldung: 09.06.2021
(73) Patentinhaber: Amazonen-Werke H. Dreyer SE & Co. KG, 49205 Hasbergen (DE)
(72) Erfinder: Große Prues, Frank, 49593 Bersenbrück (DE); Lampe, Toivo, 49080 Osnabrück (DE)

(56) Entgegenhaltungen:
- EP-A1- 2 942 107
- EP-A1- 3 539 377
- EP-B1- 0 385 926
- DE-A1- 3 904 759

## Beschreibung

Die Erfindung betrifft ein landwirtschaftliches Spritzgerät nach dem Oberbegriff des Patentanspruchs 1 und ein Verfahren zum Entleeren eines Wirkstofftanks nach dem Oberbegriff des Patentanspruchs 8.

Bei landwirtschaftlichen Spritzgeräten mit einem Direkteinspeisesystem zum geräteinternen Herstellen einer auszubringenden Spritzflüssigkeit kann die für den Ausbringvorgang erforderliche Menge an Pflanzenschutzmittel aufgrund der systemtypischen teilflächenspezifischen Behandlung im Vorfeld üblicherweise nicht präzise ermittelt werden. Es verbleibt nach Beendigung des Ausbringvorgangs regelmäßig eine Restmenge an Pflanzenschutzmittel in dem Wirkstofftank des Direkteinspeisesystems.

In diesem Zusammenhang ist aus der Druckschrift DE 10 2018 105 737 A1 eine landwirtschaftliche Feldspritze mit einem entsprechenden Direkteinspeisesystem bekannt, bei welchem ein Wirkstofftank des Direkteinspeisesystems entnommen werden kann, ohne dass es zu einem Wirkstoffaustritt kommt. Der Wirkstofftank wird hierbei mit einem speziellen Adapter gekoppelt, welcher eine fluiddichte Entnahme des Wirkstofftanks erlaubt.

In einer Vielzahl von Anwendungsfällen ist es jedoch entweder nicht gewünscht oder nicht möglich, den Wirkstofftank des Direkteinspeisesystems zu entnehmen, sodass die nach Beendigung des Ausbringvorgangs in den Wirkstofftank zurückbleibende Restmenge an Pflanzenschutzmittel abzupumpen ist. Das Abpumpen von Pflanzenschutzmittel aus einem Wirkstofftank eines Direkteinspeisesystems ist jedoch bisher mit einem erheblichen Aufwand verbunden und/oder bedingt ein aufwendiges und/oder fehleranfälliges Fluidsystem.

Die der Erfindung zugrundeliegende Aufgabe besteht somit darin, das Abpumpen einer Restmenge an Pflanzenschutzmittel aus einem Wirkstofftank eines Direkteinspeisesystems eines landwirtschaftlichen Spritzgeräts zu vereinfachen.

Die Aufgabe wird gelöst durch die Merkmale des Anspruchs 1.

Die Erfindung macht sich die Erkenntnis zunutze, dass über die Kupplung eine fluidleitende Verbindung zwischen dem Wirkstofftank und einem geräteexternen Abpumpbehälter hergestellt werden kann, ohne dass zusätzliche Leitungen oder anderen Fluidbauteile an das landwirtschaftliche Spritzgerät anzuschließen sind. Die Kupplung erlaubt somit ein Zurückpumpen der Restmenge des Wirkstoffs aus dem Wirkstofftank des Direkteinspeisesystems in einen geräteexternen Abpumpbehälter direkt über einen Leitungsabschnitt des Wirkstoff-Förderpfads und ohne den Anschluss eines separaten Abpumpschlauchs. Der geräteexterne Abpumpbehälter kann beispielsweise das Originalgebinde des Wirkstoffs sein. Die zurückgepumpte Restmenge an Wirkstoff kann somit bei einem nachfolgenden Ausbringvorgang wiederverwendet werden.

In einer bevorzugten Ausführungsform des erfindungsgemäßen landwirtschaftlichen Spritzgeräts umfasst das Direkteinspeisesystem eine Einspeisepumpe und die Kupplung ist zwischen der Einspeisepumpe und der Einspeisestelle angeordnet. Die Einspeisepumpe ist vorzugsweise dazu eingerichtet, Wirkstoff aus dem Wirkstofftank entlang des Wirkstoff-Förderpfads zu fördern. Dadurch, dass die Kupplung zwischen der Einspeisepumpe und der Einspeisestelle angeordnet ist, kann die Einspeisepumpe auch nach einer Trennung der Kupplung zum Abpumpen des Wirkstofftanks eingesetzt werden. Somit ist keine externe Pumpe zum Abpumpen des Wirkstofftanks an das landwirtschaftliche Spritzgerät anzuschließen. Der Wirkstoff-Förderpfad verläuft zwischen der Einspeisepumpe und der Kupplung vorzugsweise durch einen flexiblen Schlauch. Nach Trennen der Kupplung kann der flexible Schlauch somit komfortabel und ohne hohen Kraft- und Arbeitsaufwand mit einem geräteexternen Abpumpbehälter fluidleitend verbunden werden. Vorzugsweise wird der flexible Schlauch zum fluidleitenden Verbinden mit dem geräteexternen Abpumpbehälter abschnittsweise in den geräteexternen Abpumpbehälter eingeführt oder an einem Anschluss des geräteexternen Abpumpbehälters befestigt.

Das erfindungsgemäße landwirtschaftliche Spritzgerät wird ferner dadurch vorteilhaft weitergebildet, dass die Kupplung manuell und/oder werkzeuglos trennbar ist. Die Kupplung ist vorzugsweise beschädigungsfrei trennbar. Vorzugsweise weist die Kupplung zwei miteinander verbindbare und voneinander lösbare Kupplungsteile auf. Durch die manuelle und/oder werkzeuglose Trennbarkeit der Kupplung wird eine Schnellkupplung umgesetzt, welche ohne hohen Aufwand getrennt und wieder geschlossen werden kann. Vorzugsweise ist die Kupplung als leckagefreie Kupplung ausgebildet. Aufgrund der leckagefreien Ausbildung der Kupplung kommt es nach dem Trennen der Kupplung nicht zu einem Flüssigkeitsaustritt, auch wenn sich in den an die Kupplung angrenzenden Leitungsabschnitten noch Flüssigkeit befindet. Alternativ kann die Kupplung zumindest als leckagearme Kupplung ausgebildet sein. In diesem Fall wird ein übermäßiger Wirkstoffaustritt beim Trennen der Kupplung vermieden.

Bei dem erfindungsgemäßen landwirtschaftlichen Spritzgerät ist die Kupplung als Steckkupplung ausgebildet. Steckkupplungen lassen sich besonders komfortabel und ohne hohen Aufwand bedienen. Der Abpumpvorgang wird somit vereinfacht und beschleunigt. Bei der Kupplung handelt es sich vorzugsweise um eine Fluid-Kupplung oder eine Hydraulik-Kupplung.

Es ist außerdem ein erfindungsgemäßes landwirtschaftliches Spritzgerät bevorzugt, bei welchem der Wirkstoff-Förderpfad zwischen dem Wirkstofftank und der Einspeisestelle eine Einspeiseleitung aufweist, wobei die Kupplung in oder an der Einspeiseleitung angeordnet ist. Die Einspeiseleitung kann mehrere Leitungsabschnitte aufweisen. Die Kupplung ist vorzugsweise zwischen zwei Leitungsabschnitten der Einspeiseleitung angeordnet. Ein Leitungsabschnitt der Einspeiseleitung erstreckt sich vorzugsweise von der Einspeisepumpe bis zur Kupplung. Der sich von der Einspeisepumpe zur Kupplung erstreckende Leitungsabschnitt ist vorzugsweise ein flexibler Leitungsabschnitt und/oder kann durch eine Schlauchleitung ausgebildet sein. Die mit der Kupplung verbundenen Leitungsabschnitte sind über ein Trennen der Kupplung voneinander lösbar. Vorzugsweise befindet sich ein pumpenseitiger Leitungsabschnitt zwischen der Einspeisepumpe und der Kupplung. Nach dem Trennen der Kupplung kann der sich zwischen der Einspeisepumpe und der Kupplung befindende kupplungsseitige Leitungsabschnitt zum Abpumpen einer Restmenge in dem Wirkstoffbehälter mit einem geräteexternen Abpumpbehälter verbunden werden. Ein oder mehrere Abschnitte der Einspeiseleitung können als flexibler Schlauch, insbesondere Druckschlauch, ausgebildet sein.

In einer bevorzugten Weiterbildung des erfindungsgemäßen landwirtschaftlichen Spritzgeräts sind in dem Wirkstoff-Förderpfad zwischen dem Wirkstofftank und der Einspeisestelle eine oder mehrere Sperreinrichtungen angeordnet. Alternativ oder zusätzlich ist eine oder sind mehrere Sperreinrichtungen in die Kupplung integriert. Über die eine oder die mehreren Sperreinrichtungen ist ein Wirkstoffaustritt beim Trennen der Kupplung verhinderbar. Die eine oder die mehreren Sperreinrichtungen sind dazu eingerichtet, beim Trennen der Kupplung eine Dichtwirkung zu erzeugen.

In einer anderen bevorzugten Ausführungsform des erfindungsgemäßen landwirtschaftlichen Spritzgeräts ist zumindest eine Sperreinrichtung als Rückschlagventil, insbesondere als federbelastetes Rückschlagventil, ausgebildet. Vorzugsweise weist die Kupplung ein pumpenseitiges Kupplungsteil und ein einspeisestellenseitiges Kupplungsteil auf. In das pumpenseitige Kupplungsteil und/oder in das einspeiseseitige Kupplungsteil kann jeweils eine Sperreinrichtung, insbesondere eine als Rückschlagventil ausgebildete Sperreinrichtung, integriert sein. Ein in das pumpenseitige Kupplungsteil integriertes Rückschlagventil ist vorzugsweise federbelastet. Eine oder mehrere Sperreinrichtungen können auch als Sperrmembran ausgebildet sein, welche den Durchfluss erst bei Erreichen oder Überschreiten eines spezifischen Fluiddrucks freigeben. Die eine oder die mehreren Sperrmembranen können vorgespannte Membranen sein. Eine oder mehrere Sperrmembranen können auch in die Kupplung integriert sein.

In einer anderen Ausführungsform des erfindungsgemäßen landwirtschaftlichen Spritzgeräts ist eine zwischen der Einspeisepumpe und einem pumpenseitigen Kupplungsteil der Kupplung angeordnete Sperreinrichtung oder eine in dem pumpenseitigen Kupplungsteil der Kupplung integrierte Sperreinrichtung dazu eingerichtet, von einem Sperrzustand in einen Freigabezustand zu schalten, wenn ein von der Einspeisepumpe verursachter Förderdruck einen Druckgrenzwert erreicht oder überschreitet. Hierdurch wird erreicht, dass bei getrennter Kupplung und abgeschalteter Einspeisepumpe keine Flüssigkeit aus dem pumpenseitigen Kupplungsteil der Kupplung austritt, wenn der statische Leitungsdruck unterhalb des Druckgrenzwertes liegt. Der Anwender kann somit die Kupplung trennen und das pumpenseitige Kupplungsteil in den zu befüllenden geräteexternen Abpumpbehälter stecken. Beim Anschalten der Einspeisepumpe des Direkteinspeisesystems baut sich dann ein ausreichend hoher Förderdruck auf, um die zwischen der Einspeisepumpe und dem pumpenseitigen Kupplungsteil der Kupplung angeordnete Sperreinrichtung oder die in dem pumpenseitigen Kupplungsteil der Kupplung integrierte Sperreinrichtung von dem Sperrzustand in den Freigabezustand zu schalten und somit den Abpumpvorgang zu starten. Sobald die Einspeisepumpe wieder abgeschaltet wird, fällt der Förderdruck wieder unter den Druckgrenzwert ab, sodass die zwischen der Einspeisepumpe und dem pumpenseitigen Kupplungsteil der Kupplung angeordnete Sperreinrichtung oder die in dem pumpenseitigen Kupplungsteil der Kupplung integrierte Sperreinrichtung wieder von dem Freigabezustand in den Sperrzustand schaltet und der Abpumpvorgang unterbrochen wird.

Die der Erfindung zugrundeliegende Aufgabe wird ferner durch ein Verfahren der eingangs genannten Art gelöst, wobei im Rahmen des erfindungsgemäßen Verfahrens eine Kupplung in einem Wirkstoff-Förderpfad des Direkteinspeisesystems zwischen einem Wirkstofftank und der Einspeisestelle getrennt und eine fluidleitende Pumpverbindung zwischen dem Wirkstofftank des Direkteinspeisesystems und einem geräteexternen Abpumpbehälter unter Verwendung des zwischen dem Wirkstofftank und der Kupplung verlaufenden Abschnitts des Wirkstoff-Förderpfads hergestellt wird.

Das erfindungsgemäße Verfahren wird vorzugsweise angewendet, um den Wirkstofftank eines Direkteinspeisesystems eines landwirtschaftlichen Spritzgeräts nach einer der vorstehend beschriebenen Ausführungsformen zu entleeren. Hinsichtlich der Vorteile und Modifikationen des erfindungsgemäßen Verfahrens wird somit zunächst auf die Vorteile und Modifikationen des erfindungsgemäßen landwirtschaftlichen Spritzgeräts verwiesen.

Das Direkteinspeisesystem dient zum geräteinternen Herstellen einer auszubringenden Spritzflüssigkeit aus einer Trägerflüssigkeit, welche in einem großvolumigen Vorratsbehälter des landwirtschaftlichen Spritzgeräts bevorratet wird, und dem Wirkstoff, welcher in dem Wirkstofftank des Direkteinspeisesystems bevorratet wird.

Das erfindungsgemäße Verfahren wird ferner dadurch vorteilhaft weitergebildet, dass ein in dem Wirkstofftank befindlicher Wirkstoff mittels einer Einspeisepumpe des Direkteinspeisesystems über die fluidleitende Pumpverbindung bei getrennter Kupplung in den geräteexternen Abpumpbehälter gepumpt wird. Durch die Verwendung der Einspeisepumpe des Direkteinspeisesystems ist zum Abpumpen des Wirkstofftanks keine externe Pumpe erforderlich. Der Abpumpvorgang wird somit vereinfacht und beschleunigt.

In einer weiteren bevorzugten Ausführungsform des erfindungsgemäßen Verfahrens wird der Austritt von Wirkstoff beim Trennen der Kupplung durch eine oder mehrere in dem Wirkstoff-Förderpfad zwischen dem Wirkstofftank und der Einspeisestelle angeordnete und/oder in die Kupplung integrierte Sperreinrichtungen verhindert. Eine oder mehrere Sperreinrichtungen können als Sperrventile, insbesondere als federbelastete Sperrventile, ausgebildet sein. Eine oder mehrere Sperreinrichtungen können als Sperrmembran ausgebildet sein, wobei eine entsprechende Sperrmembran selbsttätig in einen Freigabezustand schaltet, sobald der Förderdruck einen spezifischen Druckgrenzwert erreicht oder überschreitet. Die eine oder die mehreren Sperrmembranen können vorgespannte Membranen sein.

Nachfolgend wird eine bevorzugte Ausführungsform der Erfindung unter Bezugnahme auf die beiliegende Zeichnung näher erläutert und beschrieben. Dabei zeigt:

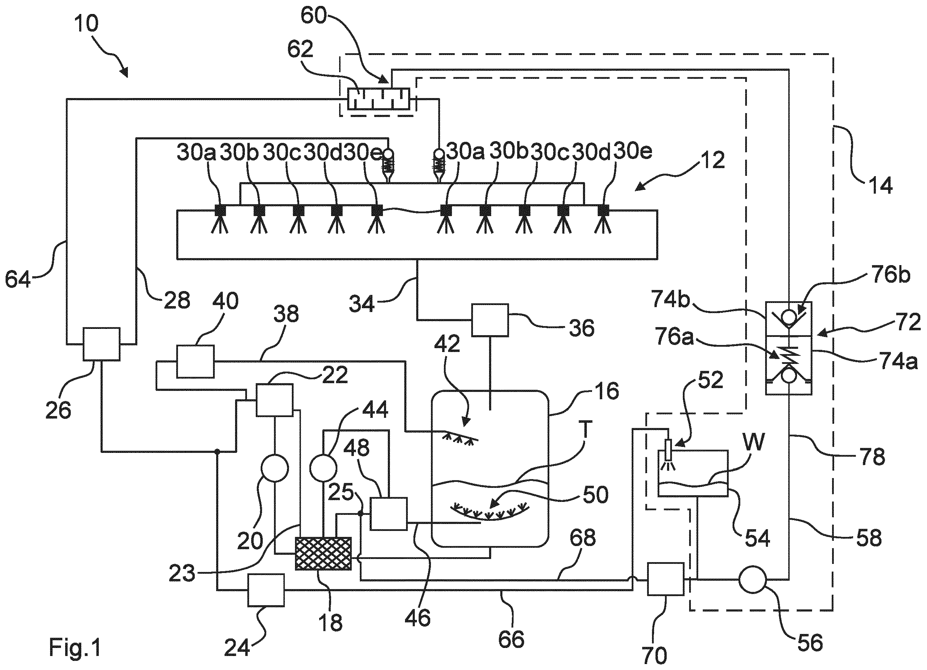

- Fig. 1: ein Ausbringsystem eines erfindungsgemäßen landwirtschaftlichen Spritzgeräts in einer schematischen Darstellung.

Die Fig. 1 zeigt ein Ausbringsystem 10 eines als Feldspritze ausgebildeten landwirtschaftlichen Spritzgeräts. Das landwirtschaftliche Spritzgerät ist sowohl mit einem Umlaufsystem 12 als auch mit einem Direkteinspeisesystem 14 ausgestattet.

Das Umlaufsystem 12 weist einen Flüssigkeitskreislauf auf, wobei in das Umlaufsystem 12 ein Vorratsbehälter 16 für eine Trägerflüssigkeit T integriert ist. Über den Flüssigkeitskreislauf des Umlaufsystems 12 lässt sich die in dem Vorratsbehälter 16 befindliche Trägerflüssigkeit T über Ausbringelemente 30a-30e, 32a-32e auf eine landwirtschaftliche Nutzfläche ausbringen. Die Ausbringelemente 30a-30e, 32a-32 sind als Spritzdüsen ausgebildet. Hierzu ist das landwirtschaftliche Spritzgerät in einem Umlaufmodus zu betreiben. In dem Umlaufmodus zirkuliert die Trägerflüssigkeit T innerhalb des Flüssigkeitskreislaufs des Umlaufsystems 12.

Mittels des Direkteinspeisesystems 14 kann Wirkstoff W aus einem Wirkstofftank 54 in die Trägerflüssigkeit T aus dem Vorratsbehälter 16 zum geräteinternen Herstellen einer auszubringenden Spritzflüssigkeit eingespeist werden. Das Einspeisen erfolgt an der Einspeisestelle 60, welche sich innerhalb einer Mischkammer 62 befindet.

Die in dem Vorratsbehälter 16 befindliche Trägerflüssigkeit T kann Wasser oder eine vorgemischte Spritzbrühe sein. Der in dem Wirkstofftank 54 befindliche Wirkstoff W kann ein hochkonzentriertes Pflanzenschutzmittel sein.

Im Umlaufmodus des landwirtschaftlichen Spritzgeräts wird die in dem Vorratsbehälter 16 befindliche Trägerflüssigkeit T von einer Umlaufpumpe 20 angesaugt und durch einen Filter 18 geleitet. Über das Durchflussregelventil 22 kann die Durchflussmenge an Trägerflüssigkeit T präzise eingestellt werden. Das Spülventil 24 ist im Umlaufmodus des landwirtschaftlichen Spritzgeräts geöffnet, sodass die Trägerflüssigkeit T dem Ventil 26 zugeleitet wird. Im Umlaufmodus des landwirtschaftlichen Spritzgeräts wird die Trägerflüssigkeit T durch das Ventil 26 in die Ausbringleitung 28 eingeleitet, über welche die Trägerflüssigkeit T dann den Ausbringelementen 30a-30e, 32a-32e zugeleitet wird. Überschüssige Trägerflüssigkeit T wird über die Rückführleitung 34 und das Rückflussregelventil 36 in den Vorratsbehälter 16 zurückgeführt.

Eine weitere Rückführung von Trägerflüssigkeit T aus dem Flüssigkeitskreislauf des Umlaufsystems 16 kann über die Rückführleitung 38 realisiert werden. Zum Einstellen des Rückflusses über die Rückführleitung 38 ist in der Rückführleitung 38 ein Rückflussregelventil 40 angeordnet. Die über die Rückführleitung 38 in den Vorratsbehälter 16 zurückgeführte Trägerflüssigkeit T wird über Behälterdüsen 42 in den Vorratsbehälter 16 eingebracht.

Ferner weist das Ausbringsystem 10 eine Rückführpumpe 44 auf, über welche Trägerflüssigkeit T aus dem Filter 18 angesaugt und über die Rückführleitung 46 und das Rückflussregelventil 48 zurück in den Vorratsbehälter 16 geleitet werden kann. Die über die Rückführleitung 46 in den Vorratsbehälter 16 zurückgeführte Trägerflüssigkeit T wird über Behälterdüsen 50 in den Vorratsbehälter 16 eingebracht. Die Behälterdüsen 42, 50 sorgen für eine Flüssigkeitsströmung innerhalb des Vorratsbehälters 16 und können aus diesem Grund auch als Rührwerke bezeichnet werden. Durch die Flüssigkeitsströmung innerhalb des Vorratsbehälters 16 werden Ablagerungen innerhalb des Vorratsbehälters 16 vermieden. Insbesondere, wenn die Trägerflüssigkeit T eine vorgemischte Spritzbrühe ist, ist eine Strömung innerhalb des Vorratsbehälters 16 erforderlich, um entsprechende Ablagerungen zu vermeiden.

In einem Einspeisemodus des landwirtschaftlichen Spritzgeräts wird der in dem Wirkstofftank 54 befindliche Wirkstoff W über eine Einspeiseleitung 58 in die Trägerflüssigkeit T eingespeist. Zum Fördern des Wirkstoffs W aus dem Wirkstofftank 54 zu der Einspeisestelle 60 weist das Direkteinspeisesystems 14 eine Einspeisepumpe 56 auf. In dem Einspeisemodus ist das Spülventil 70 geschlossen, sodass der in dem Wirkstofftank 54 befindliche Wirkstoff W durch die Einspeisepumpe 56 in die Mischkammer 62 gefördert wird.

Anders als im Umlaufmodus leitet das Ventil 26 die Trägerflüssigkeit T im Einspeisemodus in die Ausbringleitung 64 ein, sodass die Trägerflüssigkeit T aus dem Vorratsbehälter 16 ebenfalls in die Mischkammer 62 eingeleitet wird. In der Mischkammer 62 wird dann geräteintern die auszubringende Spritzflüssigkeit hergestellt, welche anschließend den Ausbringelementen 30a-30e, 32a-32e zugeleitet wird. Im Einspeisemodus wird die Rückführleitung 34 durch das Rückflussregelventil 36 gesperrt, sodass ein Rückfluss der geräteintern hergestellten Spritzflüssigkeit in den Vorratsbehälter 16 vermieden wird. Auf diese Weise wird eine Kontamination der in dem Vorratsbehälter 16 befindlichen Trägerflüssigkeit T durch den Wirkstoff W vermieden.

Nach Beendigung eines Ausbringvorgangs befindet sich in dem Wirkstofftank 54 des Direkteinspeisesystems 14 eine Restmenge an Pflanzenschutzmittel. Das Pflanzenschutzmittel ist dabei häufig äußerst zähflüssig und/oder klebrig, sodass zur Reinigung ein umfangreiches Spülen des Wirkstofftanks 54 erforderlich ist. Zum Reinigen des Wirkstofftanks 54 des Direkteinspeisesystems 14 wird Trägerflüssigkeit T aus dem Vorratsbehälter 16 über die Einspülleitung 66 und die Spüldüse 52 in den Wirkstofftank 54 eingespült. Die in den Wirkstofftank 54 des Direkteinspeisesystems 14 eingespülte Trägerflüssigkeit T wird dann zu den Ausbringelemente 30a-30e, 32a-32e gefördert. In dem Spülmodus des landwirtschaftlichen Spritzgeräts wird das Spülventil 70 geöffnet, wodurch die in dem Wirkstofftank 54 des Direkteinspeisesystems 14 eingespülte Trägerflüssigkeit T über eine separate Ausspülleitung 68 und über Leitungsabschnitte des Umlaufsystems 12 zu den Ausbringelementen 30a-30e, 32a-32e gefördert werden kann. Auf diese Weise kann die in den Wirkstofftank 54 des Direkteinspeisesystems 14 eingespülte Trägerflüssigkeit T vergleichsweise rasch über die Ausbringelemente 30a-30e, 32a-32e auf die landwirtschaftliche Nutzfläche abgegeben werden.

Der Wirkstofftank 54 ist ein fest installierter Flüssigkeitsbehälter, welcher über einen Wirkstoff-Förderpfad 78 fluidleitend mit der Einspeisestelle 60 verbunden ist. In dem Wirkstoff-Förderpfad 78 ist zwischen dem Wirkstofftank 54 und der Einspeisestelle 60 eine trennbare Kupplung 72 angeordnet, deren Trennung zu einer Unterbrechung des Wirkstoff-Förderpfads 78 führt. Durch das Trennen der Kupplung 72 kann eine nach Beendigung eines Ausbringvorgangs und vor dem Spülen des Wirkstofftanks 54 in dem Wirkstofftank 54 zurückbleibende Restmenge an Pflanzenschutzmittel in einen geräteexternen Abpumpbehälter zurückgepumpt werden. Somit kann die nach Beendigung des Ausbringvorgangs in dem Wirkstofftank 54 zurückbleibende Restmenge an Pflanzenschutzmittel in einem nachfolgenden Ausbringvorgang wiederverwendet werden. Der geräteexterne Abpumpbehälter, in welchen die Restmenge aus dem Wirkstofftank 54 zurückgepumpt werden kann, ist beispielsweise das Originalgebinde des Wirkstoffs W.

Die Kupplung 72 ist zwischen der Einspeisepumpe 56 und der Einspeisestelle 60 angeordnet, sodass die Einspeisepumpe 56 nach dem Trennen der Kupplung 72 zum Abpumpen des Wirkstoffs W aus dem Wirkstofftank 54 verwendet werden kann.

Die Kupplung 72 kann manuell und werkzeuglos von einem Bediener getrennt werden. Bei der Kupplung 72 handelt es sich um eine beschädigungsfrei trennbare und leckagefreie Kupplung. Durch die Leckagefreiheit der Kupplung 72 wird ein Wirkstoffaustritt beim Trennen der Kupplung 72 vermieden. Beispielsweise ist die Kupplung 72 eine Steckkupplung oder eine Schraubkupplung.

Die Einspeiseleitung 58 erstreckt sich entlang des Wirkstoff-Förderpfads 78. Die Kupplung 72 ist in bzw. an der Einspeiseleitung 58 angeordnet. Die Einspeiseleitung 58 weist einen pumpenseitigen Leitungsabschnitt und einen einspeisestellenseitigen Leitungsabschnitt auf. Der pumpenseitige Leitungsabschnitt der Einspeiseleitung 58 ist mit einem pumpenseitigen Kupplungsteil 74a verbunden. Der einspeisestellenseitige Leitungsabschnitt der Einspeiseleitung 58 ist mit einem einspeisestellenseitigen Kupplungsteil 74b verbunden. Nach dem Trennen der Kupplung 72 kann der pumpenseitige Leitungsabschnitt der Einspeiseleitung 58 zum Abpumpen der Restmenge mit einem geräteexternen Abpumpbehälter verbunden werden. Dies kann beispielsweise durch ein abschnittsweises Einführen des pumpenseitigen Leitungsabschnitts der Einspeiseleitung 58 in den geräteexternen Abpumpbehälter erfolgen. Der pumpenseitige Leitungsabschnitt der Einspeiseleitung 58, welcher zwischen der Einspeisepumpe 56 und dem pumpenseitigen Kupplungsteil 74a verläuft, kann ein flexibler Schlauch, insbesondere ein flexibler Druckschlauch, sein.

In das pumpenseitige Kupplungsteil 74a ist eine Sperreinrichtung 76a integriert, welche beim Trennen der Kupplung 72 einen Wirkstoffaustritt verhindert. In das einspeisestellenseitige Kupplungsteil 74b ist eine Sperreinrichtung 76b integriert, welche beim Trennen der Kupplung 72 einen Wirkstoffaustritt verhindert. Die Sperreinrichtungen 76a, 76b sind als Rückschlagventile ausgebildet. Die Sperreinrichtung 76a ist als federbelastetes Rückschlagventil ausgebildet.

Alternativ können die Sperreinrichtungen 76a, 76b auch als Sperrmembranen ausgebildet sein, welche den Durchfluss durch das jeweilige Kupplungsteil 74a, 74b erst ab einem spezifischen Fluiddruck freigeben.

Die in das pumpenseitige Kupplungsteil 74a der Kupplung 72 integrierte Sperreinrichtung 76a ist dazu eingerichtet, von einem Sperrzustand in einen Freigabezustand zu schalten, wenn ein von der Einspeisepumpe 56 verursachter Förderdruck einen Druckgrenzwert erreicht oder überschreitet. Hierdurch wird erreicht, dass bei getrennter Kupplung 72 und abgeschalteter Einspeisepumpe 56 keine Flüssigkeit aus dem pumpenseitigen Kupplungsteil 74a der Kupplung 72 austritt, da der statische Leitungsdruck unterhalb des Druckgrenzwertes liegt. Der Anwender kann die Kupplung 72 folglich trennen und das pumpenseitige Kupplungsteil 74a in den zu befüllenden geräteexternen Abpumpbehälter stecken, ohne dass hierbei Flüssigkeit aus dem pumpenseitigen Kupplungsteil 74a austritt. Beim Anschalten der Einspeisepumpe 56 baut sich dann ein ausreichend hoher Förderdruck auf, um die in dem pumpenseitigen Kupplungsteil 74a der Kupplung 72 integrierte Sperreinrichtung 76a von dem Sperrzustand in den Freigabezustand zu schalten. Während des Abpumpens des Wirkstoffs W aus dem Wirkstofftank 54 befindet sich die Sperreinrichtung 76a in dem pumpenseitigen Kupplungsteils 74a folglich in dem Freigabezustand.

Sobald die Einspeisepumpe 56 wieder abgeschaltet wird, fällt der Förderdruck unter den Druckgrenzwert ab, sodass die in dem pumpenseitigen Kupplungsteil 74a der Kupplung 72 integrierte Sperreinrichtung 76 wieder von dem Freigabezustand in den Sperrzustand schaltet.

Durch das Trennen der Kupplung 72 kann folglich eine fluidleitende Pumpverbindung zwischen dem Wirkstofftank 54 des Direkteinspeisesystems 14 und einem geräteexternen Abpumpbehälter hergestellt werden, ohne das hierfür weitere Fluidbauteile erforderlich sind.

### Bezugszeichenliste

- 10: Ausbringsystem
- 12: Umlaufsystem
- 14: Direkteinspeisesystem
- 16: Vorratsbehälter
- 18: Filter
- 20: Umlaufpumpe
- 22: Durchflussregelventil
- 24: Spülventil
- 26: Ventil
- 28: Ausbringleitung
- 30a-30e: Ausbringelemente
- 32a-32e: Ausbringelemente
- 34: Rückführleitung
- 36: Rückflussregelventil
- 38: Rückführleitung
- 40: Rückflussregelventil
- 42: Behälterdüsen
- 44: Rückführpumpe
- 46: Rückführleitung
- 48: Rückflussregelventil
- 50: Behälterdüsen
- 52: Spüldüse
- 54: Wirkstofftank
- 56: Einspeisepumpe
- 58: Einspeiseleitung
- 60: Einspeisestelle
- 62: Mischkammer
- 64: Ausbringleitung
- 66: Einspülleitung
- 68: Ausspülleitung
- 70: Spülventil
- 72: Kupplung
- 74a, 74b: Kupplungsteile
- 76a, 76b: Sperreinrichtungen
- 78: Wirkstoff-Förderpfad

- T: Trägerflüssigkeit
- W: Wirkstoff

## Patentansprüche

1. Landwirtschaftliches Spritzgerät, mit
- einem Direkteinspeisesystem (14) zum geräteinternen Herstellen einer auszubringenden Spritzflüssigkeit aus einer Trägerflüssigkeit (T) und einem Wirkstoff (W), wobei das Direkteinspeisesystem (14) einen Wirkstofftank (54) zur Bevorratung des Wirkstoffs (W) aufweist und der Wirkstofftank (54) über einen Wirkstoff-Förderpfad (78) fluidleitend mit einer Einspeisestelle (60) verbunden ist;
wobei in dem Wirkstoff-Förderpfad (78) zwischen dem Wirkstofftank (54) und der Einspeisestelle (60) eine trennbare Kupplung (72) angeordnet ist, deren Trennung zu einer Unterbrechung des Wirkstoff-Förderpfads (78) führt, **dadurch gekennzeichnet, dass** die Kupplung (72) als Steckkupplung ausgebildet ist.

2. Landwirtschaftliches Spritzgerät nach Anspruch 1,
**dadurch gekennzeichnet, dass** das Direkteinspeisesystem (14) eine Einspeisepumpe (56) umfasst und die Kupplung (72) zwischen der Einspeisepumpe (56) und der Einspeisestelle (60) angeordnet ist.

3. Landwirtschaftliches Spritzgerät nach Anspruch 1 oder 2,
**dadurch gekennzeichnet, dass** die Kupplung (72) manuell und/oder werkzeuglos trennbar ist und/oder wobei die Kupplung (72) als leckagefreie Kupplung (72) ausgebildet ist.

4. Landwirtschaftliches Spritzgerät nach einem der vorstehenden Ansprüche, **dadurch gekennzeichnet, dass** der Wirkstoff-Förderpfad (78) zwischen dem Wirkstofftank (54) und der Einspeisestelle (60) eine Einspeiseleitung (58) aufweist, wobei die Kupplung (72) in oder an der Einspeiseleitung (58) angeordnet ist.

5. Landwirtschaftliches Spritzgerät nach einem der vorstehenden Ansprüche, **dadurch gekennzeichnet, dass** in dem Wirkstoff-Förderpfad (78) zwischen dem Wirkstofftank (54) und der Einspeisestelle (60) eine oder mehrere Sperreinrichtungen (76a, 76b) angeordnet und/oder ein oder mehrere Sperreinrichtungen (76a, 76b) in die Kupplung (72) integriert sind, über welche ein Wirkstoffaustritt beim Trennen der Kupplung (72) verhinderbar ist.

6. Landwirtschaftliches Spritzgerät nach Anspruch 5,
**dadurch gekennzeichnet, dass** zumindest eine Sperreinrichtung (76a, 76b) als Rückschlagventil, insbesondere als federbelastetes Rückschlagventil, ausgebildet ist.

7. Landwirtschaftliches Spritzgerät nach einem der Ansprüche 2 bis 6, **dadurch gekennzeichnet, dass** eine zwischen der Einspeisepumpe (56) und einem pumpenseitigen Kupplungsteil (74a) der Kupplung (72) angeordnete Sperreinrichtung (76a) oder eine in dem pumpenseitigen Kupplungsteil (74a) der Kupplung (72) integrierte Sperreinrichtung (76a) dazu eingerichtet ist, von einem Sperrzustand in einen Freigabezustand zu schalten, wenn ein von der Einspeisepumpe (56) verursachter Förderdruck einen Druckgrenzwert erreicht oder überschreitet.

8. Verfahren zum Entleeren eines Wirkstofftanks (54) eines Direkteinspeisesystems (14) eines landwirtschaftlichen Spritzgeräts, insbesondere eines landwirtschaftlichen Spritzgeräts nach einem der vorstehenden Ansprüche, mit den Schritten:
- Trennen einer Kupplung (72) in einem Wirkstoff-Förderpfad (78) des Direkteinspeisesystems (14) zwischen einem Wirkstofftank (54) und der Einspeisestelle (60); und
- Herstellen einer fluidleitenden Pumpverbindung zwischen dem Wirkstofftank (54) des Direkteinspeisesystems (14) und einem geräteexternen Abpumpbehälter unter Verwendung des zwischen dem Wirkstofftank (54) und der Kupplung (72) verlaufenden Abschnitts des Wirkstoff-Förderpfads (78);
**dadurch gekennzeichnet, dass** die Kupplung (72) als Steckkupplung ausgebildet ist.

9. Verfahren nach Anspruch 8,
**gekennzeichnet durch** den Schritt:
- Pumpen eines in dem Wirkstofftank (54) befindlichen Wirkstoffs (W) in den geräteexternen Abpumpbehälter mittels einer Einspeisepumpe (56) des Direkteinspeisesystems (14) über die fluidleitende Pumpverbindung bei getrennter Kupplung (72).

10. Verfahren nach Anspruch 8 oder 9,
**gekennzeichnet durch** den Schritt:
- Verhindern des Austritts von Wirkstoff (W) beim Trennen der Kupplung (72) durch eine oder mehrere in dem Wirkstoff-Förderpfad (78) zwischen dem Wirkstofftank (54) und der Einspeisestelle (60) angeordnete und/oder in die Kupplung (72) integrierte Sperreinrichtungen (76a, 76b).

## Claims

1. Agricultural sprayer, comprising
- a direct feed system (14) for the sprayer-internal production of a spray liquid to be applied from a carrier liquid (T) and an active ingredient (W), the direct feed system (14) having an active ingredient tank (54) for storing the active ingredient (W) and the active ingredient tank (54) being fluidly connected to a feed point (60) via an active ingredient conveying path (78);
a separable coupling (72) being arranged in the active ingredient conveying path (78) between the active ingredient tank (54) and the feed point (60), the separation of which coupling leads to an interruption of the active ingredient conveying path (78), **characterized in that** the coupling (72) is designed as a plug-in coupling.

2. Agricultural sprayer according to claim 1,
**characterized in that** the direct feed system (14) comprises a feed pump (56) and the coupling (72) is arranged between the feed pump (56) and the feed point (60).

3. Agricultural sprayer according to claim 1 or 2,
**characterized in that** the coupling (72) can be separated manually and/or without tools and/or the coupling (72) being designed as a leak-free coupling (72).

4. Agricultural sprayer according to any of the preceding claims, **characterized in that** the active ingredient conveying path (78) has a feed line (58) between the active ingredient tank (54) and the feed point (60), the coupling (72) being arranged in or on the feed line (58).

5. Agricultural sprayer according to any of the preceding claims, **characterized in that** one or more locking devices (76a, 76b) are arranged in the active ingredient conveying path (78) between the active ingredient tank (54) and the feed point (60), and/or one or more locking devices (76a, 76b) are integrated in the coupling (72), by means of which devices an escape of the active ingredient can be prevented when the coupling (72) is separated.

6. Agricultural sprayer according to claim 5,
**characterized in that** at least one locking device (76a, 76b) is designed as a check valve, in particular as a spring-loaded check valve.

7. Agricultural sprayer according to any of claims 2 to 6,
**characterized in that** a locking device (76a) arranged between the feed pump (56) and a pump-side coupling part (74a) of the coupling (72) or a locking device (76a) integrated in the pump-side coupling part (74a) of the coupling (72) is designed to switch from a locking state to a release state when a conveying pressure caused by the feed pump (56) reaches or exceeds a pressure limit.

8. Method for emptying an active ingredient tank (54) of a direct feed system (14) of an agricultural sprayer, in particular an agricultural sprayer according to any of the preceding claims, comprising the steps of:
- separating a coupling (72) in an active ingredient conveying path (78) of the direct feed system (14) between an active ingredient tank (54) and the feed point (60); and
- establishing a fluid-conducting pump connection between the active ingredient tank (54) of the direct feed system (14) and a sprayer-external pumping container using the section of the active ingredient conveying path (78) running between the active ingredient tank (54) and the coupling (72);
**characterized in that** the coupling (72) is designed as a plug-in coupling.

9. Method according to claim 8,
**characterized by** the step of:
- pumping an active ingredient (W) located in the active ingredient tank (54) into the sprayer-external pumping container by means of a feed pump (56) of the direct feed system (14) via the fluid-conducting pump connection with the coupling (72) separated.

10. Method according to claim 8 or 9,
**characterized by** the step of:
- preventing the escape of active ingredient (W) when the coupling (72) is separated by one or more locking devices (76a, 76b) arranged in the active ingredient conveying path (78) between the active ingredient tank (54) and the feed point (60) and/or integrated in the coupling (72).

## Revendications

1. Appareil de pulvérisation agricole, comportant
- un système d'alimentation directe (14) permettant la production, à l'intérieur de l'appareil, d'un liquide de pulvérisation à épandre à partir d'un liquide vecteur (T) et d'une substance active (W), dans lequel le système d'alimentation directe (14) présente un réservoir de substance active (54) permettant de stocker la substance active (W), et le réservoir de substance active (54) est raccordé d'une manière conductrice de fluide à un point d'alimentation (60) par l'intermédiaire d'une voie de transport de substance active (78) ;
dans lequel un accouplement (72) séparable est disposé dans la voie de transport de substance active (78), entre le réservoir de substance active (54) et le point d'alimentation (60), sa séparation entraîne une interruption de la voie de transport de substance active (78), **caractérisé en ce que** l'accouplement (72) est réalisé sous forme d'accouplement à enfichage.

2. Appareil de pulvérisation agricole selon la revendication 1,
**caractérisé en ce que** le système d'alimentation directe (14) comprend une pompe d'alimentation (56) et l'accouplement (72) est disposé entre la pompe d'alimentation (56) et le point d'alimentation (60).

3. Appareil de pulvérisation agricole selon la revendication 1 ou 2,
**caractérisé en ce que** l'accouplement (72) peut être séparé manuellement et/ou sans outil et/ou dans lequel l'accouplement (72) est réalisé sous forme d'accouplement (72) étanche.

4. Appareil de pulvérisation agricole selon l'une des revendications précédentes, **caractérisé en ce que** la voie de transport de substance active (78) présente, entre le réservoir de substance active (54) et le point d'alimentation (60), une conduite d'alimentation (58), dans lequel l'accouplement (72) est disposé dans la conduite d'alimentation (58) ou sur celle-ci.

5. Appareil de pulvérisation agricole selon l'une des revendications précédentes, **caractérisé en ce qu'**un ou plusieurs dispositifs de blocage (76a, 76b) sont disposés dans la voie de transport de substance active (78), entre le réservoir de substance active (54) et le point d'alimentation (60), et/ou un ou plusieurs dispositifs de blocage (76a, 76b) sont intégrés dans l'accouplement (72), par l'intermédiaire desquels une fuite de substance active peut être empêchée lors de la séparation de l'accouplement (72).

6. Appareil de pulvérisation agricole selon la revendication 5,
**caractérisé en ce qu'**au moins un dispositif de blocage (76a, 76b) est réalisé sous forme de soupape antiretour, en particulier sous forme de soupape antiretour chargée par ressort.

7. Dispositif de pulvérisation agricole selon l'une des revendications 2 à 6,
**caractérisé en ce qu'**un dispositif de blocage (76a) disposé entre la pompe d'alimentation (56) et une partie d'accouplement (74a) côté pompe de l'accouplement (72) ou un dispositif de blocage (76a) intégré dans la partie d'accouplement (74a) côté pompe de l'accouplement (72) est conçu pour commuter d'un état de blocage à un état de libération lorsqu'une pression de transport provoquée par la pompe d'alimentation (56) atteint ou dépasse une valeur limite de pression.

8. Procédé permettant de vider un réservoir de substance active (54) d'un système d'alimentation directe (14) d'un appareil de pulvérisation agricole, en particulier d'un appareil de pulvérisation agricole selon l'une des revendications précédentes, comportant les étapes consistant à :
- séparer un accouplement (72) dans une voie de transport de substance active (78) du système d'alimentation directe (14) entre un réservoir de substance active (54) et le point d'alimentation (60) ; et
- produire un raccordement de pompage d'une manière conductrice de fluide entre le réservoir de substance active (54) du système d'alimentation directe (14) et un récipient de vidange de pompe externe à l'appareil à l'aide de la section de la voie de transport de substance active (78) s'étendant entre le réservoir de substance active (54) et l'accouplement (72) ;
**caractérisé en ce que** l'accouplement (72) est réalisé sous forme d'accouplement à enfichage.

9. Procédé selon la revendication 8,
**caractérisé par** l'étape consistant à :
- pomper une substance active (W) se trouvant dans le réservoir de substance active (54) vers le récipient de vidange de pompe externe à l'appareil au moyen d'une pompe d'alimentation (56) du système d'alimentation directe (14) par l'intermédiaire du raccordement de pompage lorsque l'accouplement (72) est séparé.

10. Procédé selon la revendication 8 ou 9,
**caractérisé par** l'étape consistant à :
- empêcher la fuite de substance active (W) lors de la séparation de l'accouplement (72) grâce à un ou plusieurs dispositifs de blocage (76a, 76b) disposés dans la voie de transport de substance active (78), entre le réservoir de substance active (54) et le point d'alimentation (60), et/ou intégrés dans l'accouplement (72).
